# EUROPÄISCHE PATENTSCHRIFT

(11) **EP 0 779 172 B1**
(45) Veröffentlichungstag und Bekanntmachung des Hinweises auf die Patenterteilung: **12.05.1999**
(21) Anmeldenummer: 96117271.5
(22) Anmeldetag: 28.10.1996
(51) Int. Cl.: B60J 7/22

(54) **Cabriolet mit zwei Vordersitzen sowie mit einem Fondsitzbereich**
Convertible car with two front seats and rear seating area
Voiture convertible avec deux sièges avant et banquette arrière

(30) Priorität: 11.12.1995 DE 19546083
(43) Veröffentlichungstag der Anmeldung: 18.06.1997
(73) Patentinhaber: DaimlerChrysler AG, 70567 Stuttgart (DE)
(72) Erfinder: Ottenhaus, Eugen, 70569 Stuttgart (DE); Szillus, Udo, 73730 Esslingen (DE); Wildenhof, Erhard, 71065 Sindelfingen (DE)

(56) Entgegenhaltungen:
- EP-A- 0 553 572
- GB-A- 2 127 360
- US-A- 2 530 266

## Beschreibung

Die Erfindung betrifft ein Cabriolet mit zwei Vordersitzen sowie mit einem Fondsitzbereich, in dem ein fahrzeugfest verstaubares Windschott aufstellbar ist.

Ein solches Cabriolet ist aus der DE 43 11 240 C1 bekannt. Das Cabriolet weist ein Windschott auf, das an einer Abdeckung schwenkbar gelagert ist und zusammen mit der Abdeckung in seiner Ruheposition zusammengeklappt unterhalb eines Verdeckkastendeckels des Cabriolets verstaubar ist. Das Cabriolet weist einen Fondsitzbereich auf, der im aufgestellten Zustand des Windschotts von der Abdeckung abgedeckt ist. Das Windschott ragt in seinem aufgestellten Zustand unmittelbar hinter Kopfstützen von Vordersitzen des Cabriolets von der Abdeckung nach oben ab, wobei die Abdeckung sich horizontal über den Fondsitzbereich erstreckt.

Aus der DE 43 25 306 A1 ist ein Cabriolet bekannt, das zwei Vordersitze aufweist, deren Rückenlehnen jeweils ein höhenverfahrbares Windschott zugeordnet ist.

Aufgabe der Erfindung ist es, ein Cabriolet der eingangs genannten Art zu schaffen, das ein mit einfachen Mitteln in seine Funktionsposition bringbares Windschott aufweist.

Diese Aufgabe wird dadurch gelöst, daß das Windschott in seiner verstauten Ruheposition in einem Rückenlehnenteil des Fondsitzbereiches integriert ist, wobei dem Rückenlehnenteil ein Aufnahmebereich für das Windschott zugeordnet ist, und daß als dem Windschott zugeordnete Abdeckung des Fondsitzbereiches ein wenigstens den Flächendimensionen des Windschottes entsprechender Lehnenabschnitt des Rückenlehnenteiles in eine den Fondsitzbereich etwa horizontal überdeckende Abdeckposition überführbar ist. Das Vorsehen eines Aufnahmebereiches an dem Rückenlehnenteil gestattet eine platzsparende und sichere Verstauung des Windschotts. Zum Aufstellen des Windschottes ist dieses somit in einfacher Weise aus dem jeweiligen Rückenlehnenteil herausnehmbar. Dabei wird das Windschott vorteilhaft in einem Bereich untergebracht, der bei einem viersitzigen Cabriolet in jedem Fall vorhanden ist. Beim Stand der Technik hingegen ist das Windschott nur dann verstaubar, wenn das Cabriolet auch einen Verdeckkastendeckel aufweist. Die Unterbringung des Windschotts bei dem erfindungsgemäßen Cabriolet hingegen ist unabhängig von dem Vorhandensein eines Verdeckkastendeckels. Durch die erfindungsgemäße Lösung übernimmt der Lehnenabschnitt direkt die Funktion einer den Fondsitzbereich überdeckenden Abdeckung, wodurch das Windschott unmittelbar hinter den Kopfstützen der Vordersitze aufstellbar ist. Durch den Einsatz des Lehnenabschnittes als Abdeckung wird ein zusätzliches Bauteil zur Abdeckung des Fondsitzbereiches vermieden.

In weiterer Ausgestaltung der Erfindung ist der gesamte Rückenlehnenteil schwenkbar zwischen einer schräg zu den Vordersitzen gestellten Windschottposition und seiner Sitzposition gelagert. Durch den klappbaren Rückenlehnenteil wird eine einfache Zugänglichkeit zu dem in dem Rückenlehnenteil integrierten Windschott geschaffen, wobei das Windschott vorzugsweise im Bereich der Rückseite des Rückenlehnenteiles in diesem integriert ist.

Weitere Vorteile und Merkmale der Erfindung ergeben sich aus den Unteransprüchen. Nachfolgend werden bevorzugte Ausführungsbeispiele der Erfindung beschrieben und anhand der Zeichnungen dargestellt.
- Fig. 1: zeigt schematisch eine Seitenansicht einer Ausführungsform eines erfindungsgemäßen Cabriolets, in dessen Fondsitzbereich ein hinter einem Rückenlehnenteil verstaubares Windschott angeordnet ist,
- Fig. 2: in vergrößerter Darstellung einen Ausschnitt des Cabriolets nach Fig. 1 auf Höhe des mit dem Windschott versehenen Fondsitzbereiches,
- Fig. 3: eine weitere Ausführungsform eines erfindungsgemäßen Cabriolets in einem Ausschnitt ähnlich Fig. 2, und
- Fig. 4: schematisch einen Ausschnitt eines Cabriolets gemäß einer weiteren erfindungsgemäßen Ausführungsform, bei der ein Windschott in einem rückseitigen Abschnitt eines Rückenlehnenteiles verstaubar ist.

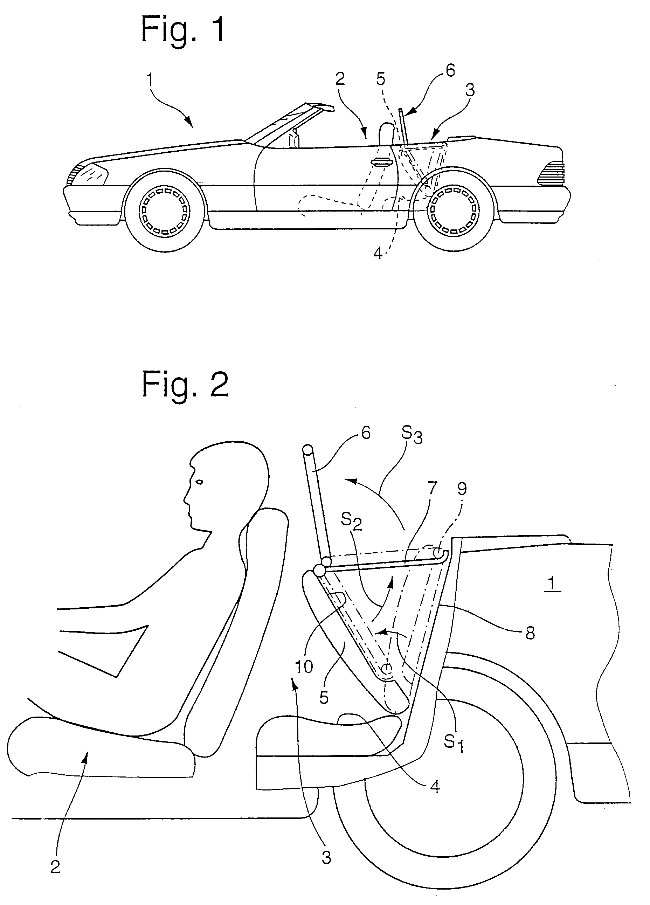

Ein Cabriolet (1) nach den Fig. 1 und 2 weist in einem Fahrgastraum zwei Vordersitze (2), und zwar einen Fahrersitz und einen Beifahrersitz, sowie einen hinter den Vordersitzen (2) angeordneten Fondsitzbereich (3) auf. Der Fondsitzbereich (3) kann entweder derart großzügig bemessen sein, daß für Fondinsassen komfortable Sitzmöglichkeiten vorhanden sind, oder er kann lediglich als Notsitzbereich ausgeführt sein. In beiden Fällen ist in dem Fondsitzbereich (3) ein Sitzkissenteil (4) angeordnet, der für zwei bis drei Sitzpositionen ausgelegt sein kann. Am Sitzkissenteil (4) schließt in seinem hinteren Bereich nach oben ein Rückenlehnenteil (5) an, der im zurückgeklappten Zustand (gestrichelte Darstellung) an einer rückseitigen Abschlußwand (8) des Fahrgastraumes anliegt.

Der Rückenlehnenteil (5) erstreckt sich über die gesamte Breite des Fondsitzbereiches und ist auf seiner der Abschlußwand (8) zugewandten Rückseite mit einem Aufnahmebereich in Form einer Vertiefung (10) für ein Windschott (6) versehen. Das Windschott (6) weist in an sich bekannter Weise einen Rahmen auf, in dem ein Windschottnetz aufgespannt ist (nicht dargestellt). Das Windschott (6) ist im Bereich eines unteren Teiles seines Rahmens schwenkbar an einer plattenartigen Abdeckung (7) gelagert, die sich ebenfalls über nahezu die gesamte Breite des Fondsitzbereiches erstreckt und im verstauten Zustand des Windschottes (6) zusammen mit dem Windschott (6) in dem Aufnahmebereich (10) des Rückenlehnenteiles (5) integriert ist. Die Abdeckung (7) ist im Bereich einer Oberseite des Rückenlehnenteiles (5) um eine horizontale, quer zur Fahrzeuglängsrichtung verlaufende Schwenkachse schwenkbar an der Rückseite des Rückenlehnenteiles (5) angeordnet. Das Windschott (6) und die Abdeckung (7) sind zusammenklappbar und gemeinsam um die Schwenkachse der Abdeckung (7) in die Vertiefung (10) einschwenkbar. Die der Schwenkachse gegenüberliegende Stirnseite der Abdeckung (7) ist auf beiden Seiten mit jeweils einem hakenartigen, nicht näher bezeichneten Bügel versehen, die im zusammengeklappten Zustand die Oberseite des Windschottes (6) teilweise umschließen. Der Rückenlehnenteil (5) ist um eine nicht näher dargestellte Schwenkachse, die ebenfalls horizontal und quer zur Fahrzeuglängsrichtung verläuft, zu den Vordersitzen (2) hin nach vorne umklappbar.

In den seitlichen, nicht dargestellten Karosserieabschlußwänden für den Fondsitzbereich (3), die die Abschlußwand (8) flankieren und in Fahrzeuglängsrichtung nach vorne gezogen sind, ist jeweils ein Zapfen (9) vorgesehen, der quer zur Fahrzeuglängsrichtung in den Fondsitzbereich (3) hinein nach innen ragt. In diese Zapfen (9) sind die beiden Bügel der Abdeckung (7) im vorgeklappten Zustand des Rückenlehnenteiles (5) einhängbar, wodurch zum einen der Rückenlehnenteil (5) und zum anderen die Abdeckung (7) in einer definierten Position arretiert sind. Wie aus Fig. 2 erkennbar ist, ist dabei der Rückenlehnenteil (5) schräg nach vorne gestellt, und die Abdeckung (7) ragt im wesentlichen horizontal von der Oberkante des Rückenlehnenteiles (5) aus zu einem nicht näher bezeichneten Verdeckkastendeckel nach hinten ab. Die Abschlußwand (8), der Rückenlehnenteil (5) sowie die Abdeckung (7) bilden in diesem Zustand ein stabiles Gelenkdreieck. Durch die fahrzeugfeste Einhängung der Abdeckung (7) liegt das Windschott (6) ebenfalls etwa horizontal in der Abdeckung (7) und kann aus dieser Position in einfacher Weise in seinen aufgestellten Zustand nach oben geklappt werden (Pfeil S₃). Zum Überführen des Windschottes (6) aus seinem verstauten Zustand in dem Rückenlehnenteil (5) (gestrichelte Darstellung) in seinen in die Funktionsposition aufgestellten Zustand werden beim dargestellten Ausführungsbeispiel daher drei Schritte benötigt. Zunächst wird in einem Schritt (S₁) der Rückenlehnenteil (5) nach vorne geklappt, anschließend wird in einem Schritt (S₂) die Abdeckung (7) nach oben geklappt und in die fahrzeugfesten Zapfen (9) eingehängt. Schließlich wird durch den Schritt (S₃) das Windschott (6) in seine etwa vertikale Funktionsposition nach oben aufgestellt.

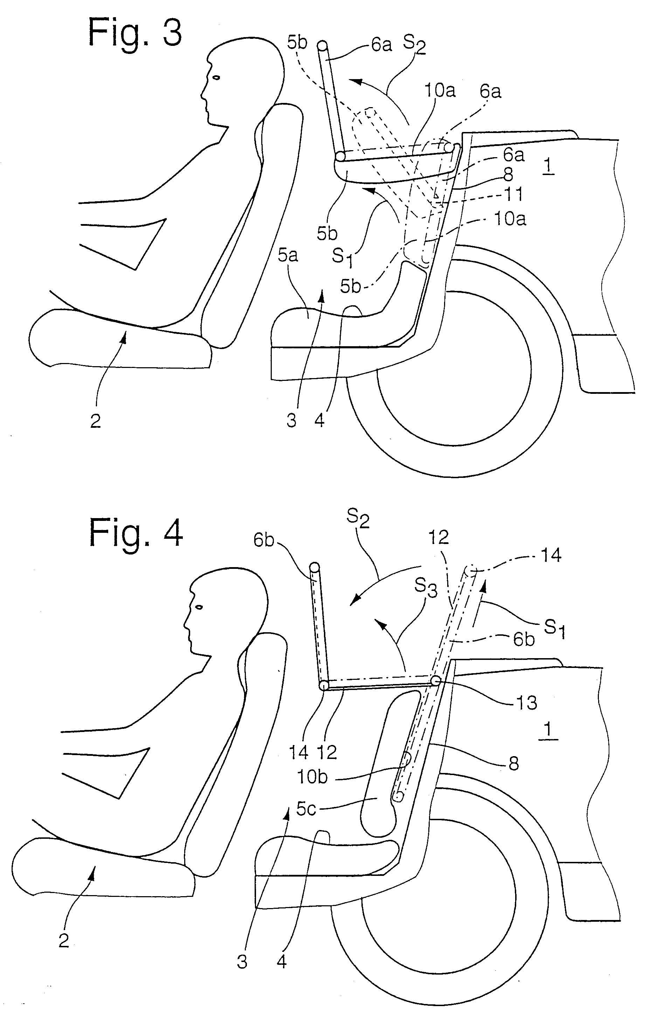

Beim Cabriolet (1) nach Fig. 3 ist der Rückenlehnenteil (5a, 5b) im Fondsitzbereich (3) in zwei Lehnenabschnitte (5a und 5b) unterteilt, wobei ein unterer Lehnenabschnitt (5a) einstückig an dem Sitzkissenteil (4) anschließt. Der obere Rückenlehnenteil (5b) ist mittels entsprechender, nicht näher dargestellter Führungsmittel beweglich in den jeweiligen seitlichen Abschlußwänden des Fondsitzbereiches (3) gelagert. Dabei weisen die Führungsmittel in jeder Abschlußwand eine zu der Abschlußwand (8) etwa parallel verlaufende Kulissenführung auf, in der ein unteres Ende des Rückenlehnenabschnittes (5b) mittels zweier nach außen abragender Bolzen (11), welche Kulissensteine bilden, linear geführt ist. Da der Lehnenabschnitt (5b) jedoch lediglich im Bereich seines unteren Endes mittels der Bolzen (11) linear geführt ist, ist der obere Teil des Lehnenabschnittes (5b) gemäß der gestrichelten Darstellung in Richtung des Pfeiles (S1) nach vorne herausschwenkbar. Um eine Zwangsführung dieser zusätzlichen Schwenkbewegung, die der Linearbewegung überlagert ist, zu erzielen, sind dem Lehnenabschnitt (5b) weitere Führungsmittel in Form von Gelenkhebeln zugeordnet, die den Lehnenabschnitt (5b) in eine horizontale Endposition auf Höhe des Verdeckkastendeckels überführen. Für diese Endposition sind Arretiermittel und Anschläge vorgesehen, so daß der frei nach vorne abragende Lehnenabschnitt (5b) in dieser horizontalen Position stabil abgestützt ist.

Der Lehnenabschnitt (5b) entspricht in seinen Flächendimensionen etwa den Dimensionen des Windschottes (6a), das an einer Oberseite des Lehnenabschnittes (5b) schwenkbar gelagert ist und in einer als Aufnahmebereich dienenden Vertiefung (10a) im Bereich der Rückseite des Lehnenabschnittes (5b) integriert ist. Diese Rückseite des Lehnenabschnittes (5b) ist in der horizontalen Abdeckposition des Lehnenabschnittes (5b) nach oben gewandt. Das Windschott (6a) ist daher in der horizontalen Abdeckposition des Lehnenabschnittes (5b) in einfacher Weise nach oben aufstellbar (Pfeil S₂). Der Schwenklagerung des Windschottes (6a) sind in an sich bekannter Weise Anschläge zugeordnet, die das Windschott (6a) in einer etwa vertikal aufgestellten Funktionsposition arretieren. Zum Verstauen des Windschottes (6a) wird dieses in einfacher Weise wieder in die Aufnahmevertiefung (10a) des Lehnenabschnittes (5b) zurückgeklappt, bis es auf dem Boden der Aufnahmevertiefung (10a) aufliegt. Anschließend wird die Arretierung der oberen Endposition des Lehnenabschnittes (5b) gelöst und der Lehnenabschnitt (5b) wieder in seine Sitzfunktion zurückgeführt (gestrichelte Darstellung). In dieser Sitzfunktion ist das Windschott (6a) der Abschlußwand (8) zugewandt.

Beim Ausführungsbeispiel nach Fig. 4 ist ein Fondsitzbereich (3) mit einem Sitzkissenteil (4) sowie mit einem entlang einer Abschlußwand (8) des Cabriolets (1) nach oben verlaufenden Rückenlehnenteil (5c) versehen. Der Rückenlehnenteil (5c) ist starr relativ zu der Abschlußwand (8) positioniert und weist auf seiner der Abschlußwand (8) zugewandten Rückseite eine taschenartige, als Aufnahmebereich dienende Vertiefung (10b) zum Verstauen eines Windschottes (6b) auf. Die taschenartige Vertiefung (10b) ist mit seitlichen Linearführungen versehen, in denen das Windschott (6b) verschiebbar und nach oben herausziehbar bzw. von oben in die Vertiefung (10b) einschiebbar ist. Das Windschott (6b) ist an einer flächigen Abdeckung (12) schwenkbar gelagert, die wiederum in der Linearführung mittels einer Schwenkachse (13) schwenkbar gelagert ist. Im verstauten Zustand des Windschottes (6b) ist dieses um die Schwenkachse (14) mit der Abdeckung (12) zusammengeklappt und in dem zusammengelegten Zustand in die Vertiefung (10b) eingeschoben.

Um das Windschott (6b) in seine Funktionsposition aufstellen zu können, wird das Windschott (6b) in der zusammengeklappten Position einschließlich der Abdeckung (12) zunächst in Richtung des Pfeiles (S1) nach oben gezogen und anschließend wird die Einheit aus Abdeckung (12) und Windschott (6b) um die Schwenkachse (13) nach vorne geklappt. Zur Arretierung der Abdeckung (12) in der horizontalen Position - wie dargestellt - sind Anschläge vorgesehen, die die Abdeckung (12) einschließlich des Windschottes (6b) in dieser horizontalen Position stützen. Das Verschwenken der Einheit aus Windschott (6b) und Abdeckung (12) erfolgt in Richtung des Pfeiles (S₂). Anschließend wird das Windschott (6b) in Richtung des Pfeiles (S₃) in seine aufgestellte Funktionsposition um die an der Abdeckung (12) angeordnete Schwenkachse (14) nach oben verschwenkt. Das Zusammenlegen und Verstauen des Windschottes (6b) einschließlich der Abdeckung (12) erfolgt in entsprechend umgekehrter Reihenfolge gemäß der Umkehrrichtung der Pfeile (S).

## Patentansprüche

1. Cabriolet mit zwei Vordersitzen sowie mit einem Fondsitzbereich, in dem ein fahrzeugfest verstaubares Windschott aufstellbar ist,
**dadurch gekennzeichnet,**
daß das Windschott (6, 6a, 6b) in seiner verstauten Ruheposition in einem Rückenlehnenteil (5, 5b, 5c) des Fondsitzbereiches (3) integriert ist, wobei dem Rückenlehnenteil (5, 5b, 5c) ein Aufnahmebereich (10, 10a, 10b) für das Windschott (6, 6a, 6b) zugeordnet ist, und daß als dem Windschott (6a) zugeordnete Abdeckung des Fondsitzbereiches (3) ein wenigstens den Flächendimensionen des Windschotts (6a) entsprechender Lehnenabschnitt (5b) des Rückenlehnenteiles (5, 5b) in eine den Fondsitzbereich (3) etwa horizontal überdeckende Abdeckposition überführbar ist.

2. Cabriolet nach Anspruch 1,
**dadurch gekennzeichnet,**
daß der gesamte Rückenlehnenteil (5) schwenkbar zwischen einer schräg zu den Vordersitzen (2) gestellten Windschottposition und seiner Sitzposition gelagert ist.

3. Cabriolet nach einem der vorhergehenden Ansprüche,
**dadurch gekennzeichnet,**
daß das Windschott (6, 6b) klappbar an einer Abdeckung (7, 12) für den Fondsitzbereich (3) angeordnet ist, die gemeinsam mit dem Windschott (6, 6b) in dem Aufnahmebereich (10, 10b) des Rückenlehnenteiles (5, 5c) verstaubar ist.

## Claims

1. A convertible with two front seats as well as a rear seating area, in which a stow-away wind-shield secured to the vehicle can be erected,
**characterised in that**
in its stowed-away non-operating position, the wind-shield (6, 6a, 6b) is integrated in a backrest member (5, 5b, 5c) of the rear seating area (3), the backrest member (5, 5b, 5c) having a housing compartment (10, 10a, 10b) for the wind-shield (6, 6a, 6b), and in that to form a cover for the rear seating area (3) co-operating with the wind-shield (6a) a portion of the backrest (5b) of the backrest member (5, 5b), the flat dimensions of which correspond at least to the flat dimensions of the wind-shield (6a), can be moved across into an approximately horizontal cover position bridging the rear seating area (3).

2. A convertible as claimed in claim 1,
**characterised in that**
the entire backrest member (5) is mounted so that it can be swung between a position in which the upright wind-shield is at an angle relative to the front seats (2) and its seat position.

3. A convertible as claimed in one of the preceding claims,
**characterised in that**
the wind-shield (6, 6b) is arranged so that it can be folded on a cover (7, 12) for the rear seating area (3) which can be stowed away together with the wind-shield (6, 6b) in the housing compartment (10, 10b) of the backrest member (5, 5c).

## Revendications

1. Cabriolet comprenant deux sièges avant ainsi qu'une zone de banquette arrière, dans lequel un coupe-vent escamotable solidaire du véhicule peut être mis en position,
caractérisé
en ce que, dans sa position de repos escamotée, le coupe-vent (6, 6a, 6b) est intégré dans une partie dossier (5, 5b, 5c) de la zone de banquette arrière (3), une région réceptrice (10, 10a, 10b) pour le coupe-vent (6, 6a, 6b) étant associée à la partie dossier (5, 5b, 5c), et en ce que, pour servir de fermeture de la zone de banquette arrière (3) associée au coupe-vent (6a), un segment (5b) de la partie dossier (5, 5b) qui correspond au moins aux dimensions de surface du coupe-vent (6a), peut être placé dans une position de fermeture qui recouvre la zone (3) de banquette arrière dans une disposition à peu près horizontale.

2. Cabriolet selon la revendication 1,
caractérisé
en ce que la partie dossier (5) est montée pour pivoter en entier entre une position de coupe-vent, disposée obliquement vers les sièges avant (2), et sa position de siège.

3. Cabriolet selon une des revendications précédentes,
caractérisé
en ce que le coupe-vent (6, 6b) est agencé de façon à pouvoir être rabattu contre une fermeture (7, 12) pour la zone de banquette arrière, fermeture qui peut être escamotée conjointement avec le coupe-vent (6, 6b) dans la zone réceptrice (10, 10b) de la partie dossier (5, 5c).
